Europäisches Patentamt

European Patent Office

Office européen des brevets

(11) Publication number: **0 076 135**
A2

## EUROPEAN PATENT APPLICATION

(21) Application number: 82305091.9

(22) Date of filing: 27.09.82

(51) Int. Cl.³: **B 25 J 9/00**
B 25 J 19/00, B 25 J 15/00

(30) Priority: 28.09.81 JP 152072/81
19.10.81 JP 165764/81

(43) Date of publication of application:
06.04.83 Bulletin 83/14

(84) Designated Contracting States:
DE FR GB IT SE

(71) Applicant: Hitachi, Ltd.
5-1, Marunouchi 1-chome
Chiyoda-ku Tokyo 100(JP)

(72) Inventor: Sakata, Tomoaki
Shimookaso 13 1385, Kamiyabecho
Totsuka-ku Yokohama(JP)

(74) Representative: Williams, Trevor John et al,
J.A. KEMP & CO. 14 South Square Gray's Inn
London WC1R 5EU(GB)

(54) Apparatus for taking out articles.

(57) An article taking out apparatus for taking out articles in a one-by-one from a group of articles left irregularly. The apparatus comprises a gripper having a plurality of gripper fingers which are pivotally secured to a gripper body at their one ends and carries respective contact sensors at their free ends. The gripper is carried by a transporting section which is adapted to move the gripper horizontally and vertically. A sensing section is adapted to receive the signals from the contact sensors. A drive control section is adapted to control the driving of the gripper and the transporting section. The gripper and the transporting section are driven in accordance with the signals from the contact sensors to search out the surfaces of an article to be gripped and to grip the article at the searched surfaces.

F I G. I

APPARATUS FOR TAKING OUT ARTICLES

BACKGROUND OF THE INVENTION

The present invention relates to an apparatus for taking out articles which are left irregularly.

The vibration type parts feeder has been broadly used for taking out articles in a one-by-one from a group of articles which are left irregularly and feeding the articles to a predetermined position. The vibration type part feeder, however, suffers from various shortcomings. Namely, this type of apparatus has only a small adaptability to a variety of shapes of articles and cannot handle fragile articles. In addition, a noise level of the operation thereof is considerably high.

In order to obviate these problems, various studies and attempts have been made to develop an article take-out apparatus employing an artificial eyesight. In this type of apparatus, a TV camera catches articles left irregularly. The images caught by the camera are processed by a processing unit of a computer and an article to be taken out is determined therein. Consequently a mechanical gripping means is driven and controlled to take out the aimed article. At the present stage, however, this apparatus can hardly be put into practical use because of the expensiveness of the artificial eyesight and processing unit. Studies and attempts on a gripping device having an artificial tactual sense have been also made. Such apparatus, however, do not have a function for taking out articles in one-by-one from a group of articles left irregularly, but a function merely for confirming the grip, adjustment of the gripping force and discrimination of gripped articles through the tactual sense.

SUMMARY OF THE INVENTION

In view of the above, the present invention aims as its primary object at providing an article taking out apparatus in which a grippable article is automatically sought out by an inexpensive and simple construction having high reliability and took out in one-by-one to feed to a next step of process.

To this end, the present invention provides an article taking out apparatus employing a gripping portion having a plurality of gripper fingers each provided with sensing means for sensing a contact with the article, wherein the surfaces of article at which the article is to be gripped are searched through the output from the sensing means, so that the article is gripped at such surfaces. More specifically, in the apparatus of the present invention, the gripping portion is lowered with their fingers kept closed until the contact of finger ends with the article is sensed, and the gripper fingers are opened along the article surfaces in accordance with the output from the sensing means and the signal informing the positions of the gripping fingers until the side surfaces of the article or boundary between the aimed article and an adjacent article is searched out.  The griper fingers are then operated to grip the article.

The invention provides also an apparatus in which sensing means for sensing a contact with the article is further provided on the root of the gripping portion, wherein the gripping portion is lowered with its fingers kept opened and, when the sensing means on the finger ends senses a contact with the article, the gripping portion is once pulled upwardly and then moved horizontally in the direction of the finger which has sensed the contact.  Then, the gripping portion is lowered until the sensing means on the root of the gripping portion senses the contact with the article and, thereafter, the gripping portion is driven to grip the aimed article.

BRIEF DESCRIPTION OF THE DRAWINGS

Fig. 1 is a perspective view showing the whole of an article taking out apparatus in accordance with the present invention;

Fig. 2 is a perspective view of a gripper finger mechanism in a gripping portion shown in Fig. 1;

Figs. 3A and 3B are a partially sectional front view and a side view of the end portion of the gripper finger shown in Fig. 2;

Fig. 4 is a block diagram of a control system used in the apparatus embodying the present invention;

Figs. 5A , 5B and 5C are flow chart sections showing the operation of the apparatus in accordance with the present invention, the bottom of Fig. 1 and the top of Fig. 2 are put together at their marks and the bottom of Fig. 2 and the top of Fig. 3 are also put together at their marks and consequently the complete flow chart is obtained;

Figs. 6A to 6F are illustrated of the positions of the apparatus controlled in accordance with the flow chart shown in Fig. 5;

Fig. 7 is a partly-sectioned front view of the gripping portion of another apparatus embodying the present invention;

Fig. 8 is a view chart showing the operaton of the apparatus shown in Fig. 7; and

Figs. 9A to 9D are illustrations of the position of the apparatus controlled in accordance with the flow chart shown in Fig. 8.

DESCRIPTION OF THE PREFERRED EMBODIMENTS:

Preferred embodiments of the present invention will be described hereinunder with reference to the

0076135

accompanying drawings.

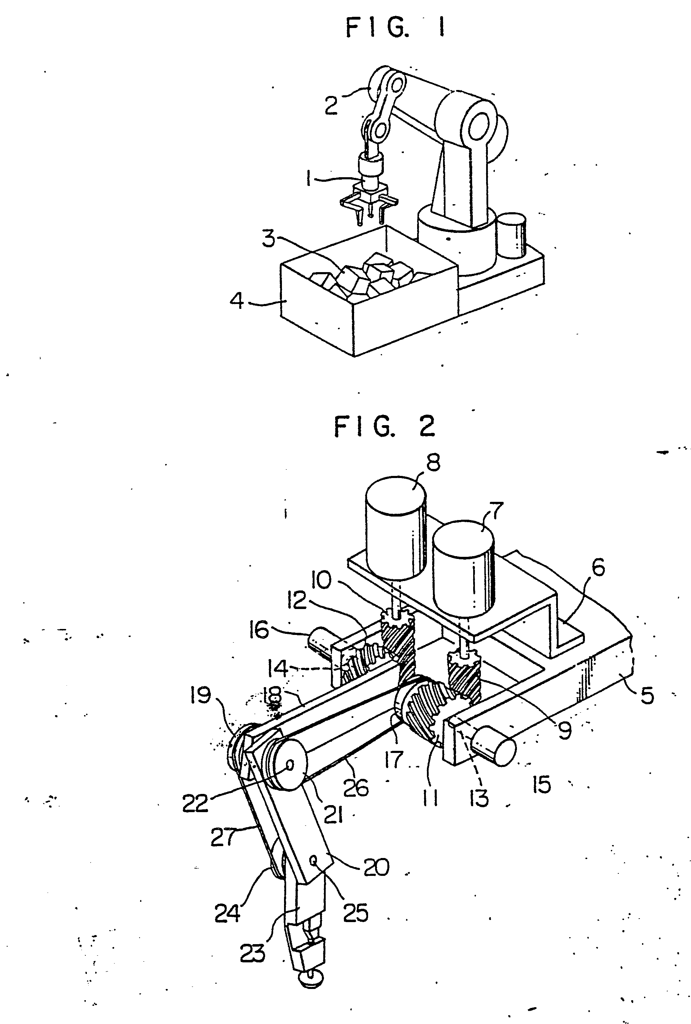

Referring first to Fig. 1, a gripping portion or gripper 1 is carried by a transporting portion 2 which is adapted to carry and move the gripper 1 horizontally and vertically and may be constituted by an industrial robot driven by an electric motor. A plurality of articles 3 are left irregularly within a container 4 disposed under the gripper 1. Fig. 2 illustrates the construction of one of the gripper fingers incorporated in the gripper 1. Motors 7 and 8 are fixed to the bracket 6 which is fixed to a base 5. The motors 7 and 8 have driving shafts directly connected to worms 9 and 10. A worm wheel 11 meshing with the worm 9 is rotatably mounted to the basde 5 through a shaft 13. A pulley 17 is fixed to one end surface of the worm wheel 11. The shaft 13 is directly connected to an input shaft of an angle detector 15 fixed to the base 5. A worm wheel 12 meshing with the worm 10 is rotatably mounted to the base 5 through a shaft 14. A first finger section 18 is fixed at one end portion thereof to one end surface of the.worm wheel 12. The shaft 14 is directly connected to an input shaft of an angle detector 16 fixed to the base 5. A pulley 19 is fixed to the other end portion of the first finger section 18. A second finger section 20 carries at open end portion thereof a pulley 21 fixed thereto. The second finger section with the pulley 21 is pivotally carried by the first finger section 18 through an articulatory pin 22. A pulley 24 is fixed to one end portion of a third finger section 23. The third finger section 23 with the pulley 24 is pivotally carried by the second finger section 20 through an articulatory pin 25. The pulleys 17 and 21 are drivingly connected to each other by means of a wire rope 26. Similarly, the pulley 19 and 24 are drivingly connected to each other by means of a wire rope 27.

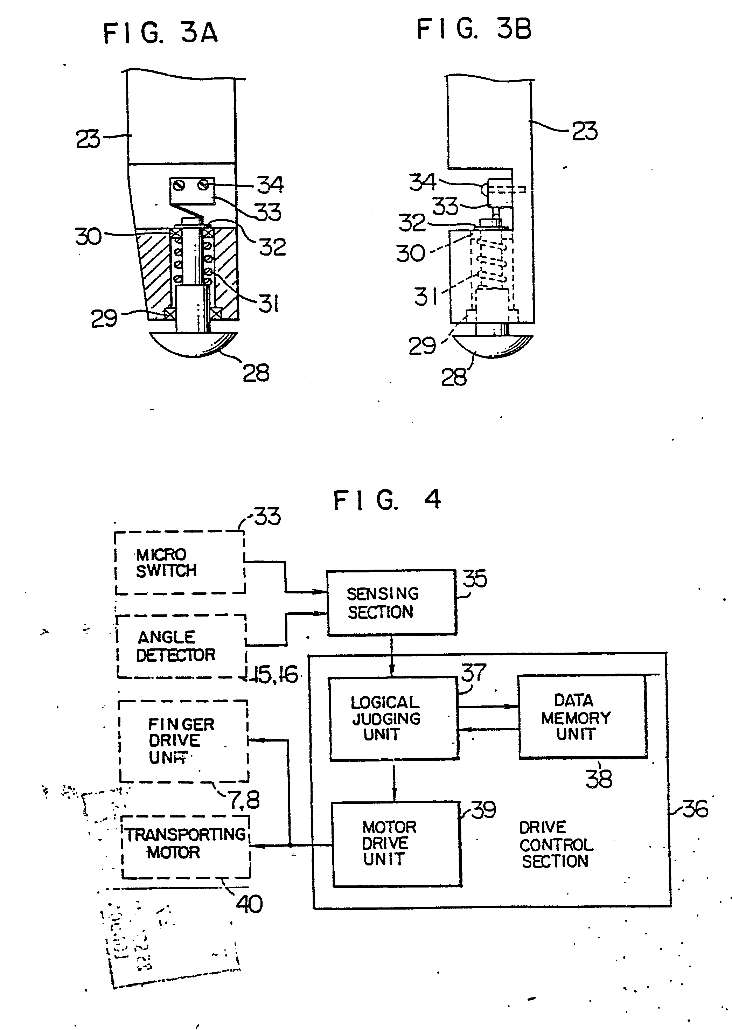

Referring now to Figs. 3A and 3B which show the details of the construction of the end portion of the third finger section 23, an actuating member said 28 is slidably born by plain bearings 29 and 30 which are press-fitted into opposite end portions of a bore provided in the third finger section 23. An actuating member said 28 is normally depressed by a coiled spring 31 but is prevented from dropping off by a stopper ring 32 fixed to the upper end portion of an actuating member said 28. A microswitch 33 is fixed to the third finger section 23 by means of a screw 34 so that a tongue of the switch 33 is in contact with the upper end of an actuating member said 28.

As will be understood from a block diagram shown in Fig. 4, a control system incorporated in this embodiment has a sensing section 35 and a drive control section 36. The drive control secton 36 comprises a logical judging unit 37, data memory unit 38 and a motor drive unit 39. These constituents are connected in a manner explained hereinunder. Microswitches 33 associated with an actuating member said 28 provided on three fingers and angle detectors 15 and 16 are connected to the input side of the sensing section 35. The output side of the sensing section 35 is connected to the input side of the logical judging unit 37. The logical judging unit 37 and the data memory unit 38 are connected to each other in a crossing manner at their input and output sides. The input side of the motor drive unit 39 is connected to the output side of the logical judging unit 37, while the output side of the drive unit 39 is connected to finger drive motors 7 and 8 and a transporting motor 40. In this Figure, the microswitch, the angle detector, the finger drive motor and the transporting motor are shown in singular form, although they are used in plural actually.

In operation, the transporting portion 2, which is a robot driven by an electric motor in this case, is able to transport a gripping portion 1 horizontally and vertically.

The operation of the fingers will be explained referring to Fig. 2. The output of the motor 8 is transmitted to the first finger section 18 through a worm 10 and a worm wheel 12 thereby to pivot the first finger section with the shaft 14. The angular displacement is detected by the angle detector 16. The output of the motor 7 is transmitted to the second finger section 20 through the worm 9, worm wheel 11, pulley 17, wire rope 26 and the pulley 21 thereby to pivot the second finger section 20 around an articulatory pin 22. The angular displacement is detected by the angle detector 15 through the shaft 13 fixed to the worm wheel 11. Since the pulley 24 fixed to the third finger section 23 is connected to the pulley 19 fixed to the first finger section 18 through the wire rope 27, the third finger section 23 maintains the initial orientation regardless of the rotational angle of the second finger section 20. In Fig. 2, the third finger section 23 extends along the vertical direction.

The fact that the initial orientation of the third finger section is not influenced by the angular displacement of the second of finger section 20 means that such orientation is also not influenced by the angular displacement of the first finger section 18. It is, therefore, possible to transport the third finger sections 23 to any desired position in a vertical plane containing the third finger section 23, maintaining the vertical orientation of the third finger section 23, by combining the angular displacements of the first and the second finger sections 18 and 20. In other words, each finger can move up and down independently of the opening and closing thereof.

The operation of the sensing of the contact between the finger end and the artilce 3 will be explained hereinunder with reference to Figs. 3A and 3B. An actuating member said 28 is normally depressed downwardly by a coiled spring 31. However, as the third finger section 23 is further pressed by a force exceeding the predetermined force even after the contact of an actuating member said 28 with the article 3, an actuating member said 28 hits the tongue of the microswitch 33 against the coiled spring 31.

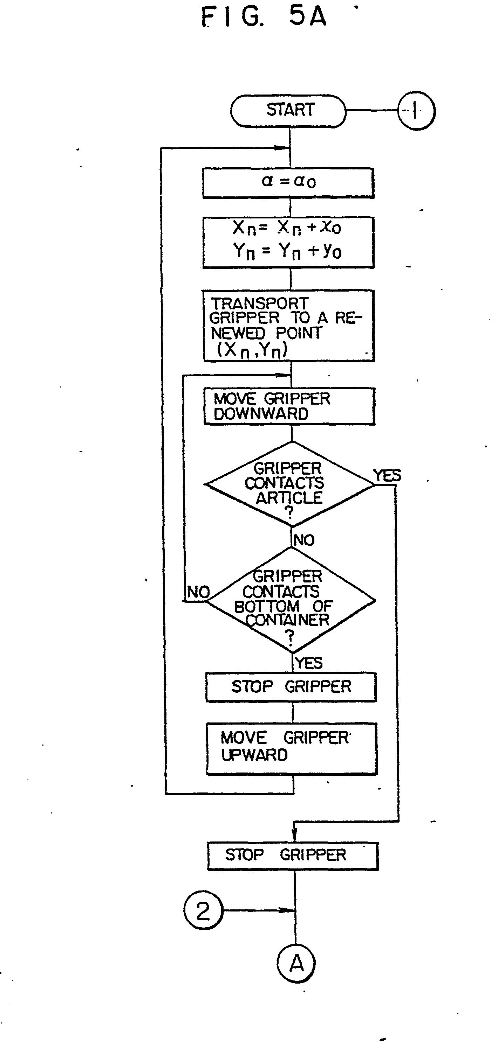

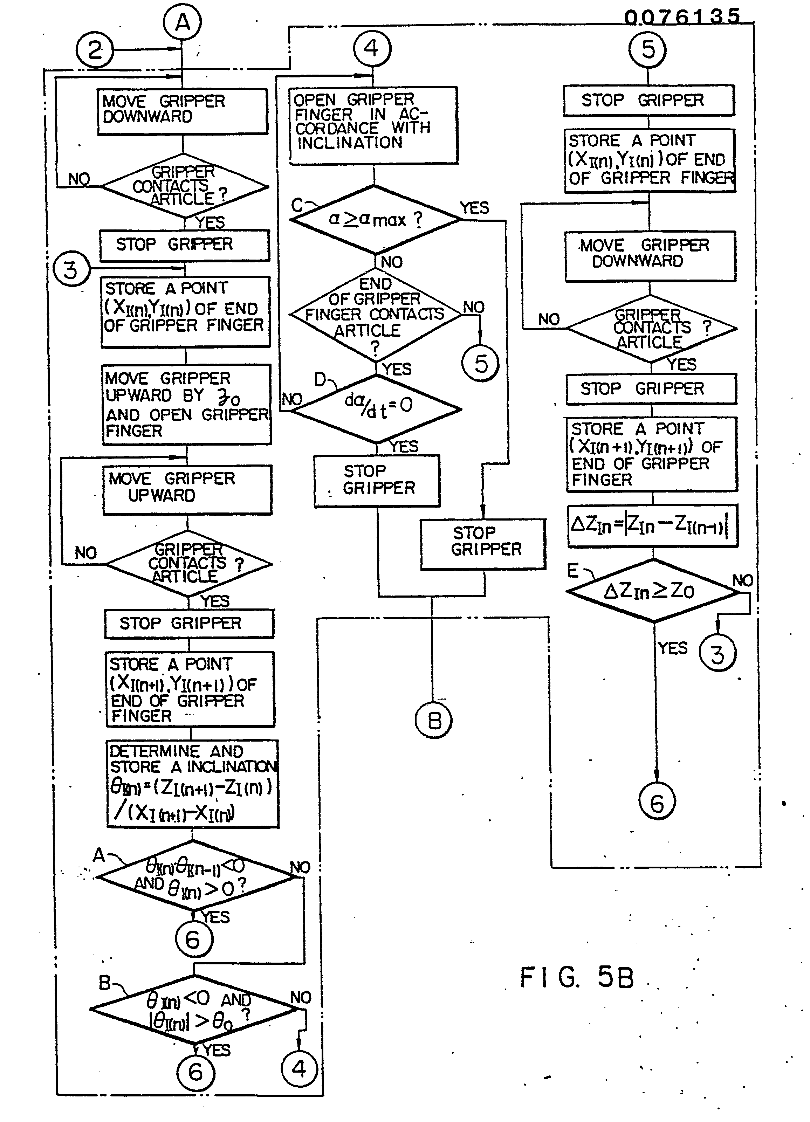

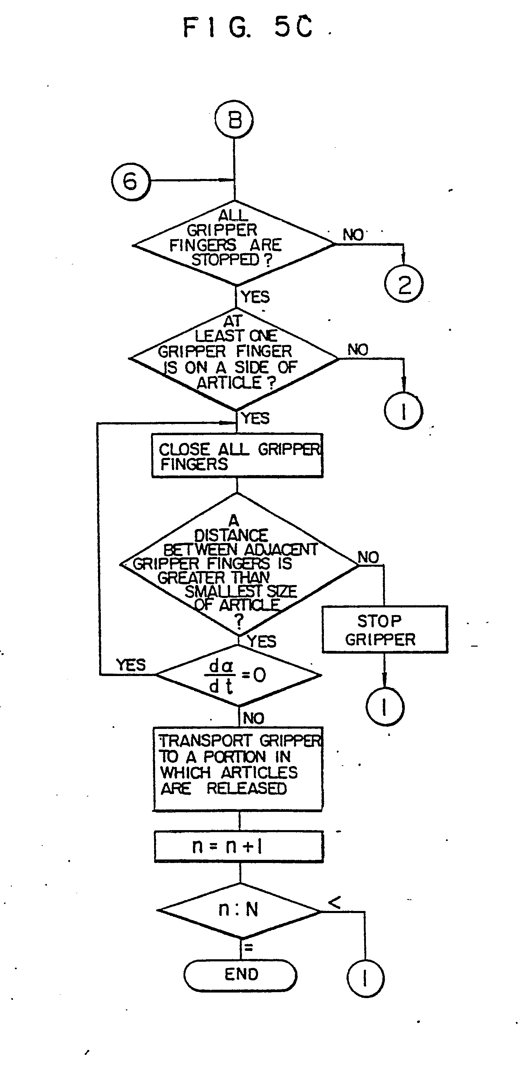

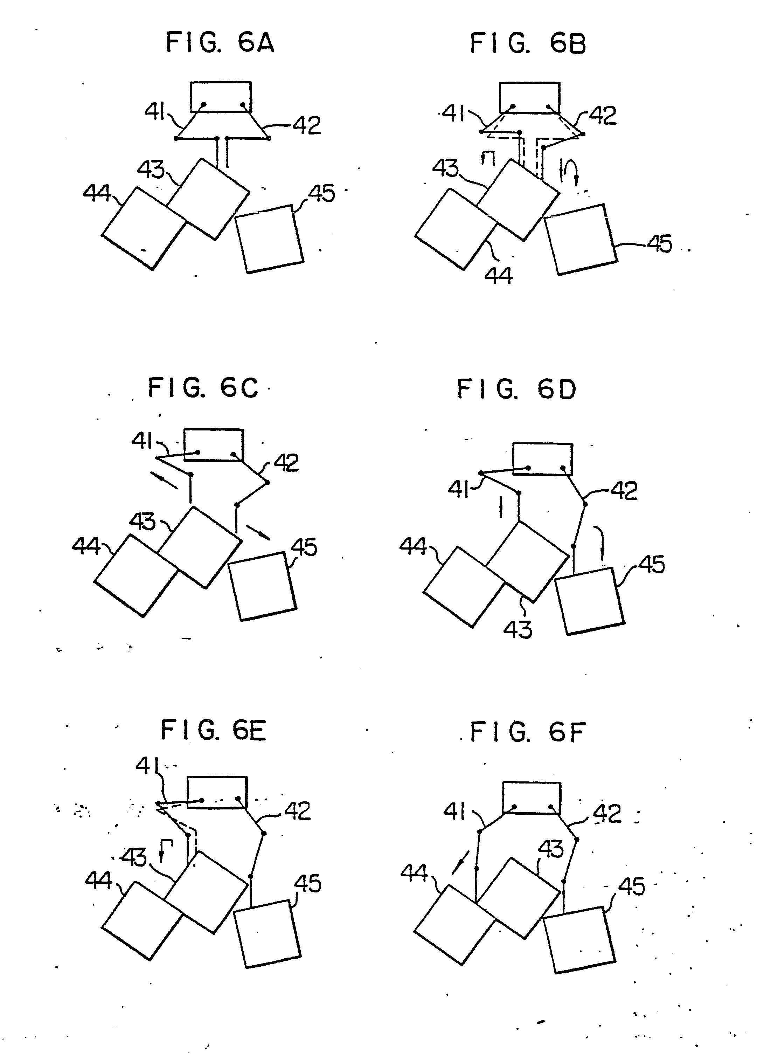

The operation of the control system will now be described with specific reference to Fig. 4. The sensing section 35 inputs the signals from the microswitch 33 and from the angle sensors 15 and 16. The inputted signals are converted into voltage signals demanded by the logical judging unit 37 and outputted thereto. The logical judging unit 37 performs a control operation as shown in Figs. 5 and 6 using the signals from the sensing section 35 and the data stored in the data memory unit 38. The detail of this control will be explained later. The renewed data produced in the execution of this control operation are stored in the data memory unit 38. The motor drive unit 39 is a power source for driving the finger drive motors 7 and 8 and the transporting motor 40 in accordance with the commands from the logical judging unit 37.

The control operation executed by the logical judging unit 37 will be explained hereinunder with reference to Figs. 5A to 5C and 6. The flow chart shown in Figs. 5A to 5C designates the process for handling an article 43 having a rectangular cross-section as shown in Fig. 6 or a cubic or parallelopiped article such as article 3 shown in Fig. 1. The operation will be explained hereinunder with reference to the flow chart.

With the fingers closed to such an extent as unable to grip the article 3 or 43, the gripper is approached to any desired point above the container 4 (See Fig. 1) and is lowered towards the parts 3 or 43. The point at which the gripper 1 starts to be lowered will be referred to as "starting point" hereinafter. During the downward movement of the fingers, when a finger end gets in contact with the article 3 or 43 and the contact with the article is sensed by at least one microswitch 33, the downward movement of the gripper 1 is stopped and the process proceeds to the steps in the flow chart section shown in Fig. 5B. If, however, no contact is sensed during the downward movement, the gripper 1 is further lowered almost to the bottom of the container 4 and the gripper 1 is lifted. The gripper 1 is then moved to a new starting point and lowered again. The foregoing description of operation is made under a condition that the data such as bottom area and height of the container, a position ($X_n$, $Y_n$) of the starting point, initial degree of opening $\alpha_0$ of fingers and so forth have already stored in the data memory unit 38.

Hereinafter, a description will be made as to the contorl operation in the flow chart section shown in Fig. 5B. The steps of the flow chart section shown in Fig. 5B are processed by each finger independently, so that the fingers can operate in synchronism if a time-sharing processing is effected for those fingers. Such steps shown in Fig. 5B are intended for gradually opening the fingers along the article surfaces without operating the transporting portion 2, i.e. without moving the gripper 1 as a unit. The conditions for stopping this operation of fingers are as follows. Namely, one of these conditions is that the gripper finger has found out a surface of the article which can be gripped (referred to as condition I), another condition is that the finger has found out the boundary between the searched article and an adjacent article (condition II) and the last is that the both findings have been failed (condition III). Thus, when the handled article is a cubic or parallelopiped one 3 or 43, the aforementioned conditions are classified into following five cases.

(i)      During the opening operation of the fingers along the article surface, a height difference excessing the predetermined amount is detected. (Condition I)

(ii)     The inclination angle of the article surface to the horizontal plane is greater than a limited angle $\theta_E$ i.e. closer to vertical (Condition I). The limited angle $\theta_E$ is defined as follows:

$$\Theta_E = \frac{\pi}{2} - \tan^{-1} \mu \text{ (rad)}$$

where, $\mu$ represents the friction coefficient.
The limited angle $\Theta_E$ means the minimum inclination angle necessary for attaining the gripping friction force when the gripper fingers are closed in the horizontal direction.

(iii)     The opening of the gripper finger is obstructed by an adjacent article.  (Condition II)
In the case where the articles have smooth surfaces having no projection like as the articles 3 or 43, the opening operation of the fingers is obstructed only by the adjacent article or the wall of the container 4.

In the described embodiment, the sensing of the contact with the adjacent article is made through a fact that the output from the angle detector 15 or 16 which represents the position of the finger becomes constant while the fingers are moved at a constant driving force.

(iv)     The inclination or gradient of the article surface is changed from downward (descending) slope to upward (ascending) slope while the fingers are opening.  (Condition II)  When the articles have no recess in their surfaces like as the articles 3 or 43, the above-mentioned change of gradient takes place only at the boundary between the artile and an adjacent article.

(v)     The degree of opening of the fingers has been increased beyond a degree suitable for the size of the article. (Condition III)

In Fig. 5B, judgements E, B, D, A and C shown by thick solid lines correspond to the above-mentioned cases (i), (ii), (iii), (iv) and (v), respectively. Among these cases (i) to (v), the detection condition of the boundary in the cases (iii) and (iv) somewhat varies depending on the nature of the article. For isntance, when the article has a convexity and/or a concavity on the surfaces thereof, the discrimination between the convexity and/or the concavity and the boundary between articles is made taking into consideration of the opening position of the gripper finger or of the extent of the height or depth of the convexity or concavity.

The series of the operation shown in Fig. 5B will be explained hereinunder wiht reference to Figs. 6A to 6F. Fig. 6A illustrates the state in which the finger 41 is stopped upon contact with the article 43. Referring now to Fig. 6B, the gripper finger 41 is moved upward by a predetermined amount and is moved to open and then lowered until it comes into contact with the article 43. The gripper finger 42 is lowered until the gripper finger 42 comes into contact with the article 43 and then the gripper finger 42 is moved upward by a predetermined distance and moved to opne it. Sequently the gripper finger 42 is lowered until it becomes into contact with the article 43. The above-explained operation corresponds to the part of the flow chart section shown in Fig. 5B before the judgement A and is intended for detecting the inclination angle (gradient) of the article surface along the direction of opening movement of each finger.

Then, in the judgement A, a judgement is made as to whether the condition of the case (iv) mentioned above is satisfied or not. In the illustrated embodiment, since there is no inclined surface, the answer of the judgement is "NO" and hence the process proceeds to the judgement B. The judgement B makes a judgement as to where the condition of the case (ii) mentioned before is satisfied or not. The answer thereof is "NO" because the inclination is an ascending slope or positive. The answer for the finger 42 is also "NO" because the inclination angle is smaller than the aforementioned limited angle $\theta_E$. Consequently, the process proceeds to a step 4 for each finger.

Fig. 6C illustrates the position in which the gripper fingers 41 and 42 are gradually opened along the surfaces of the article. This operation corresponds to the loop starting from a step 4 and returning to the same via a judgement D. In this state, however, the process for the finger 41 is branched to the step 5 and stoppoed because the finger end has separated from the article 43, i.e. because the answer to the question "finger end contacts article?" in "NO".

The description hereinbelow will be made independently for the finger 41 and the finger 42.

Referring first to finger 41, the process for the finger 41 is stopped at the step 5 in the flow chart. The height difference is determined during the process between the step 5 and a judgement E (See Fig. 6C). In the judgement E, a judgement is made as to whether the condition of the case (i) is satisfied or not. The answer thereof is "NO", so that the process jumps back to the step 3 and the inclination of the article surface is determined again during the process between the step 3 and the judgement A (See Fig. 6D). In the judgement A, a judgement is made as to whether the condition of the case (iv) is satisfied or not. In this case, the answer thereof is "NO", so that the process proceeds to the judgement B. In the judgement B, a judgement is made as to whether the condition of the case (ii) is satisfied or not. Since the answer thereof is "NO", the process jumps to the step 4. Accordingly, the finger 41 is gradually opened along the article surface (See Fig. 6E).

The process of opening of the finger 41 corresponds to the loop starting from the step 4 and returning to the same via the judgement D. If the finger 41 comes into contact with adjacent article 44, the answer in the judgement D (i.e. in the judgement as to whether the condition (iii) is satisfied or not) is changed into "YES". In consequence, the finer is stopped and the information that the contact is made with the adjacent article is stored in the data memory unit 38 and the process proceeds to a step 6 (See Fig. 6F).

In the step 6, a check is made as to whether all of the fingers are stopped satisfying any one of the conditions of the cases (i) to (v). The finger which has already been stopped is kept unmoved until all of other fingers are stopped.

Referring now to the operation of the finger 42, as the finger 42 is opened along the article surface (Fig. 6C), the finger end comes out of contact with the article surface and the process is branched to the step 5. Then, the height difference is determined through the operation starting from the step 5 to the judgement E (See Fig. 6D).

In the judgement E, a judgement is made as to whether the condition of the case (i) is staisfied or not. The answer thereof is "YES" in this case. Then, the information that the contact is made with the side surface of the article is stored in the data memory unit 38 and the process proceeds to a step 6.

It is thus confirmed that both of the fingers 41 and 42 have satisfied any one of the conditions of the case (i) to (v) and have been stopped. Then, the process proceeds further to the flow chart section shown in Fig. 5C. After all of the fingers stop opening, the fingers then begins the gripping operation. However, before the gripping operation, it is required to judge whether the gripping is worth doing, i.e. the gripping operation is not meaningless. Namely unless there is at least one grippable surface, the article cannot be gripped even though the fingers are closed, so that the process is returned to the starting point 1 in the flow chart. However, if there is at least one grippable surface, the fingers start to grip the article. As the fingers are closed to narrow a space defined by the fingers and the space is judged not able to accommodate the article whatever posture the article may take, it is regarded that the gripping operation is failed and the process is returned to the starting point 1 also.

If the gripping is not failed, it is regarded that the article has been gripped safely when all of the fingers are stopped. Then, the gripper transports the article to a predetermined releasing position where it releases the article thereby to complete the operation for taking out the article.

The whole procss of the flow chart is ceased when all of the articls N have been taken out.

As will be understood from the foregoing description, according to the present invention, it is possible to obtain a rather cheap article takint out apparatus having a wide applicability.

Another embodiment of the present invention will be described hereinunder with reference to the accompanying drawings.

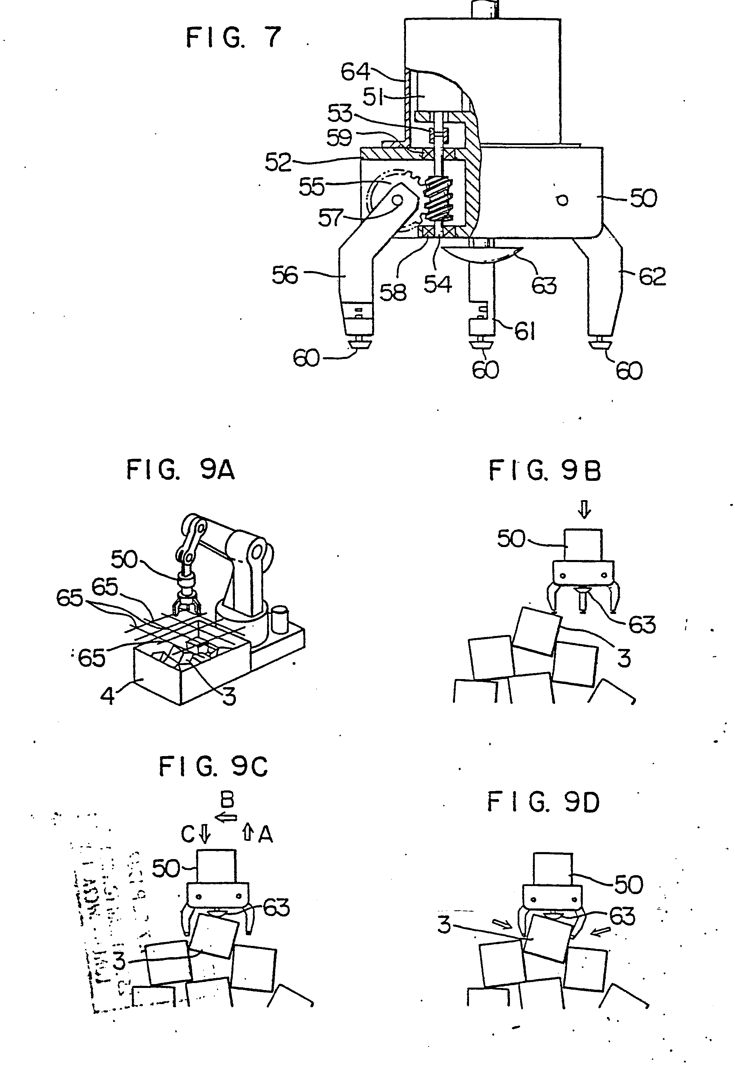

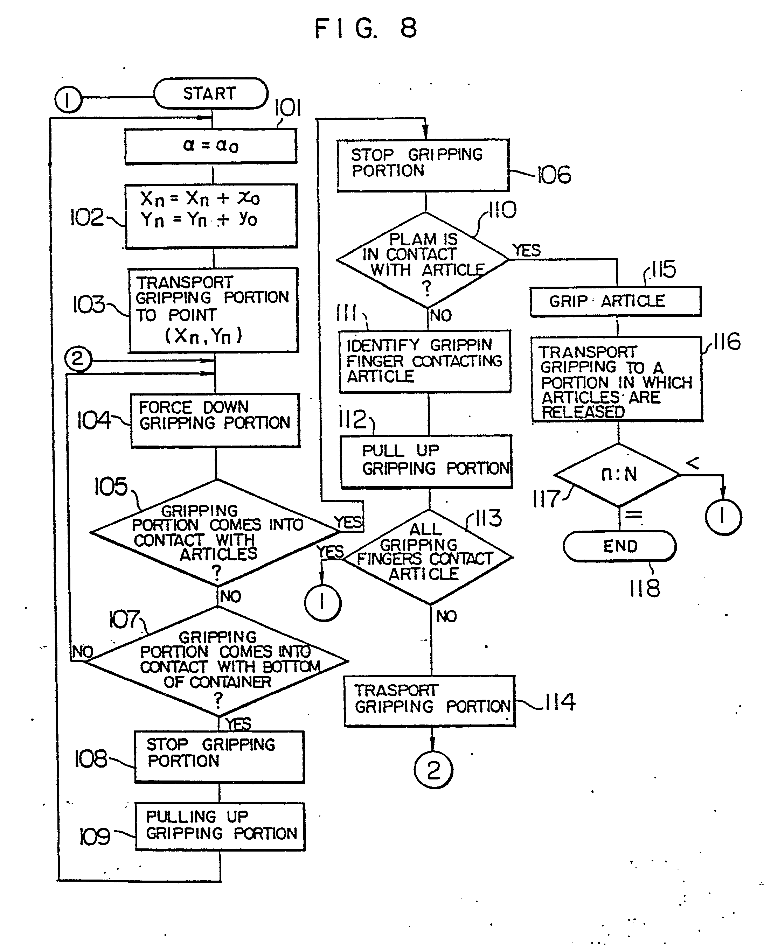

Fig. 7 shows a gripper 50 used in the article taking out apparatus of this embodiment. The gripper 50 has a main body 52, a drive motor 51, coupling 53, worm 54, worm wheel 55, a gripper finger 56 and an articulatory pins 57 piovotally carrying the finger 56. The arrangement is such that the output of the motor 51 is transmitted to the finger 56 through the coupling 53, worm 54 and the worm wheel 55 thereby to pivot the finger 56 around the pin 57. Numerals 58 and 59 denote bearings for supporting the opposite end porton of the shaft secured to the worm 54. An actuating member said 60 of the same type as that explained in connection with Fig. 3 is attached to the free end of the finger 56. The gripper 50 further has two additional fingers 61 and 62 which are constructed substantially in the same form as the first-mentioned finger 56 and have their own driving systems the same as the first-mentioned one. These fingers 61 and 62 are also provided at their free ends with an actuating member said 60 of the same type as that attached to the first-mentioned finger 56. In this embodiment, an additional an actuating member said 63 having a construction substantially identical to that of the an actuating member said 60 is attached to the root portion, i.e. the bottom surface of the main body 52. Namely, the article taking out apparatus of this embodiment features an actuating member said 63 provided on the bottom surface of the main body 52 of the gripper.

The operation in the article takint out apparatus of this embodiment wiull be explained hereinunder in connection with the flow chart shown in Fig. 8 and illustrations of operation in Figs. 9A to 9D. In this embodiment, the construction of the control system is substantially identical to that explained before in connection with Fig. 4.

Referring first to Fig. 9A, a plurality of starting points 65, 65n .. are beforehand set above the container 4. Then, the fingers are opened to the predetermined degree $\alpha_O$ by a command from the step 101 of the flow chart shown in Fig. 8 and the gripper is moved to a predetermined starting point (Xn, Yn) by a command from the step by a command from the step 103. The downward movement of the gripper is started by a command from the step 104. Fig. 9B shows an exmaple of the appearances of the gripper 50 and an article 3 as observed when the gripper is being lowered.

Continuous watching is made to detect any contact between the article and the finger end or the bottom surface of the gripper. As the contact is sensed in a step 105, the process is branched to a step 106 and the downward movement of the gripper is stopped. If no contact is sensed in the step 105, the operation cycle of the steps 104, 105 and 107 is repeated until the gripper reaches the bottom of the container. When the gripper reaches the bottom of the container, the downward movement is stopped in a step 108 and the gripper is moved upward again in a step 109. The process is returned to the step 1 and the starting point is renewed in a step 102. Then the gripper is transported a renewed starting point and lowered in the same manner that explained before, to search the article until the contact of the gripper with the article is sensed in the step 105.

As an article is searched out through the cycle operation of the above-explained steps, the process braches to the step 106 and the downward movement of the gripper is stopped. In a step 110, a judgement is made as to whether the contact with the article is made at the finger end or at the bottom surface of the gripper.

If it s confirmed that the contact is made at a finger end, the finger which is in contact with the article is stored in the control system in a step 111 and the gripper is pulled up in a step 112.

Then, the memory of the finger which contacted the article is recalled in a step 113 and the gripper is transported towards the position of the above-mentioned finger which contacted the article. In the case that two fingers contact with the article simultaneously, the gripper is moved toward the mid point between the positions of these fingers. More practically, assuming that the left finger has contacted with the article 3 as shown in Fig. 9B, the gripper is once lifted as indicated by arrow A in the step 112 and, thereafter, the gripper is moved toward the above-mentioned finger, i.e. leftwardly as indicated by an arrow B in a step 114. Then, the process is returned to the step 104 of the flow chart and the gripper is moved downwardly as indicated by an arrow C in the step 104. It is conceivable that in the step 113 judged is that all of three fingers are simultaneously contacted wiht an article. This means that the fingers will never be able to grip this article even if they are moved inwardly or closed. In such a case the process is returned to the step 101 and the starting point is renewed in the step 102 and the same operation is repeated.

When the gripper 50 has been lowered to a position where the gripper 50 can grip the article 3 as shown in Fig. 9C, the bottom surface of the gripper comes into contact with the article and this contact is detected by an actuating member said 63 on the bottom surface of the gripper and confirmed in the step 110. Then, in a step 115, the fingers are moved toward one another to grip the article. The confirmation of the completion of gripping can be made, for example, by the followings.

(1)      It is to provide the article contact surface of each finger with another detecting switch.

(2)         It is to provide a rotation angle detector capable of detecting the rotatoin angle of the shaft of the finger drive motor 51 or the pin 57 carrying the finger, to make it possible to confirm the completion of the gripping when the change of the rotation angle is stopped.

(3)         It is to measure the time length of operation of the finger drive motor after the start up of the same and to make decision of completion of gripping when a predetermined time has elaspsed.

Then, in the step 116, the article is transported to a predetermined position and released. The described operation is repeated until the container 4 becomes empty by the cycle which starts from the step 101 to the step 117. The process is finally ended in a step 118 when the all of articles N have been taken out.

As will be understood from the foregoing description, according to the present invention, it is possible to sense the presence and position of articles by means of simple contact type sensors without necessitating any expensive artificial eyesight device and processing equipment. It is, therefore, possible to obtain a low-cost and reliable artilce taking out apparatus which considerably facilitates the maintenance work and operates with a distinguished durability.

CLAIMS:

1.        An article taking out apparatus comprising:
a gripping section having a plurality of gripper fingers
each being provided at its free end with a detecting
means for detecting contact with an article and carried
at the other end thereof on said gripping section, said
fingers adapted to grip said article; a transporting
section carrying said gripping section and transporting
the same horizontal and vertically; a sensing secton
receiving signals from said detecting means; a drive
control section for controlling the operation of said
gripping section and said transporting section in
accordance with said signals; and respective driving
means for driving said gripping section and said
transporting section in accordance with command signals
from said drive control section; wherein the surfaces of
said article which can be gripped are searched out from
the signals from said detecting means and then said
gripping section is driven to grip said article at said
surfaces.

2.        An apparatus according to claim 1, wherein
said detecting means on each gripper fingers includes
an actuating member slidably carried on the free end of
said gripper finger, a coiled spring biasing said
actuating member in a predetermined direction, and a
microswitch having a tongue contacting with the end of
said actuating member and detecting the contact between said article and said actuating member.

3.      An apparatus according to claim 1, wherein each of said gripper fingers includes a first finger section one end of which is pivotally carried on said gripping section and to the other end of which a first pulley is attached, a second finger section carrying at its one end a second pulley attached thereto and pivotally carried by the other end of said first finger section, a third finger section carrying at its one end a third pulley attached thereto and pivotally carried by the other end of said second finger section, a wire rope through which said second pulley is drivingly connected to a pulley of a driving source, and a wire rope through which said first pulley is drivingly connected to said third pulley, said third finger section is always held at a constant angle.

4.      An apparatus according to claim 3, wherien said third finger section is always held in the vertical direction.

5.      An article taking out apparatus comprising: a gripping section having a plurality of gripper fingers each being provided at its free end with a detecting means for detecting contact with an article and carried at the other end thereof on said gripping section, said fingers adapted to grip said article, said gripping section further provided with an additional sensor on the bottom surface of said gripping section and for detecting contact with said article; a transporting section carrying said gripping section and transporting the same horizontally and vertically; a sensing section receiving signals from said detecting means; a drive control section for controlling the operation of said gripping section and said transporting section in accordance with said signals; and respective driving means for driving said gripping section and said transporting section in accordance with command signals from said drive control section; wherein the position of said article which can be gripped are searched out from the signals from said detecting means and then said gripping section is driven to grip said article.

6.      An apparatus according to claim 5, wherein said detecting means on each gripper fingers includes an actuating member slidably carried on the free end of said gripper finger, a coiled spring biasing said sensor dog in a predetermined direction, and a microswitch having a tongue contacting with the end of said actuating member and detecting the contact between said article and said actuating member.

FIG. 1

FIG. 2

# FIG. 3A

23
34
33
32
30
31
29
28

# FIG. 3B

23
34
33
32
30
31
29
28

# FIG. 4

```
MICRO          33
SWITCH

ANGLE
DETECTOR       15,16

FINGER
DRIVE
UNIT           7,8

TRANSPORTING
MOTOR          40
```

```
SENSING        35
SECTION

LOGICAL        37        DATA
JUDGING                  MEMORY
UNIT                     UNIT
                         38

MOTOR          39        DRIVE
DRIVE                    CONTROL
UNIT                     SECTION
                                   36
```

0076135

# FIG. 5A

(A)

(2) →

MOVE GRIPPER DOWNWARD

GRIPPER CONTACTS ARTICLE ? — NO / YES

STOP GRIPPER

(3) →

STORE A POINT $(X_{I(n)}, Y_{I(n)})$ OF END OF GRIPPER FINGER

MOVE GRIPPER UPWARD BY $Z_0$ AND OPEN GRIPPER FINGER

MOVE GRIPPER UPWARD

GRIPPER CONTACTS ? ARTICLE — NO / YES

STOP GRIPPER

STORE A POINT $(X_{I(n+1)}, Y_{I(n+1)})$ OF END OF GRIPPER FINGER

DETERMINE AND STORE A INCLINATION $\theta_{I(n)} = (Z_{I(n+1)} - Z_{I(n)}) / (X_{I(n+1)} - X_{I(n)})$

A — $\theta_{I(n)} \cdot \theta_{I(n-1)} < 0$ AND $\theta_{I(n)} > 0$ ? — NO / YES → (6)

B — $\theta_{I(n)} < 0$ AND $|\theta_{I(n)}| > \theta_0$ ? — NO / YES → (6)

(4)

OPEN GRIPPER FINGER IN ACCORDANCE WITH INCLINATION

C — $\alpha \geq \alpha_{max}$ ? — YES / NO

END OF GRIPPER FINGER CONTACTS ARTICLE ? — NO → (5) / YES

D — $d\alpha/dt = 0$ — NO / YES

STOP GRIPPER

STOP GRIPPER

(B)

(5)

STOP GRIPPER

STORE A POINT $(X_{II(n)}, Y_{I(n)})$ OF END OF GRIPPER FINGER

MOVE GRIPPER DOWNWARD

GRIPPER CONTACTS ? ARTICLE — NO / YES

STOP GRIPPER

STORE A POINT $(X_{II(n+1)}, Y_{II(n+1)})$ OF END OF GRIPPER FINGER

$\Delta Z_{IIn} = |Z_{IIn} - Z_{II(n-1)}|$

E — $\Delta Z_{IIn} \geq Z_0$ — NO / YES → (3)

(6)

FIG. 5B

# FIG. 5C

( B )

( 6 )

**ALL GRIPPER FINGERS ARE STOPPED ?** — NO → ( 2 )

YES

**AT LEAST ONE GRIPPER FINGER IS ON A SIDE OF ARTICLE ?** — NO → ( 1 )

YES

CLOSE ALL GRIPPER FINGERS

**A DISTANCE BETWEEN ADJACENT GRIPPER FINGERS IS GREATER THAN SMALLEST SIZE OF ARTICLE ?** — NO → STOP GRIPPER → ( 1 )

YES

YES ← $\dfrac{d\alpha}{dt} = 0$

NO

TRANSPORT GRIPPER TO A PORTION IN WHICH ARTICLES ARE RELEASED

$n = n + 1$

n : N — < → ( 1 )

=

END

FIG. 6A

FIG. 6B

FIG. 6C

FIG. 6D

FIG. 6E

FIG. 6F

FIG. 7

FIG. 9A

FIG. 9B

FIG. 9C

FIG. 9D

# FIG. 8

FIG. 8

START — 101

1

$\alpha = \alpha_0$

102 — $X_n = X_n + x_0$ / $Y_n = Y_n + y_0$

103 — TRANSPORT GRIPPING PORTION TO POINT $(X_n, Y_n)$

2

104 — FORCE DOWN GRIPPING PORTION

105 — GRIPPING PORTION COMES INTO CONTACT WITH ARTICLES ? — YES / NO

107 — GRIPPING PORTION COMES INTO CONTACT WITH BOTTOM OF CONTAINER ? — NO / YES

108 — STOP GRIPPING PORTION

109 — PULLING UP GRIPPING PORTION

106 — STOP GRIPPING PORTION

110 — PLAM IS IN CONTACT WITH ARTICLE ? — YES / NO

111 — IDENTIFY GRIPPIN FINGER CONTACTING ARTICLE

112 — PULL UP GRIPPING PORTION

113 — ALL GRIPPING FINGERS CONTACT ARTICLE — YES / NO

114 — TRASPORT GRIPPING PORTION

2

115 — GRIP ARTICLE

116 — TRANSPORT GRIPPING TO A PORTION IN WHICH ARTICLES ARE RELEASED

117 — n:N — < / =

1

118 — END